# EUROPEAN PATENT APPLICATION

(11) **EP 3 384 808 A1**
(43) Date of publication of application: **10.10.2018**
(21) Application number: 18165399.9
(22) Date of filing: 03.04.2018
(51) Int. Cl.: A47B 1/05, B60N 3/00

(54) **EXTENSION TABLE**

(30) Priority: 06.04.2017 SE 1750418
(71) Applicant: Idesign AB, 117 27 Stockholm (SE)
(72) Inventor: Larsvall, Johan, 117 33 Stockholm (SE)
(74) Representative: Ehrner & Delmar Patentbyrå AB

(57) **Abstract**

An extension table (1), comprising a table top (2), a table stand (3), at least one extension leaf (4), and at least two supporting arms (5) for transferring the at least one extension leaf (4) from a storage position (A) to a use position (C) or vice versa. Each supporting arm (5) comprises a first supporting arm part (6) and a second supporting arm part (7) coupled together by a coupling means (10). When the first supporting arm part (6) is in a retracted position (D) and the second supporting arm part (7) is in a start position (F) the at least one extension leaf (4) is positioned in the storage position (A). When the first supporting arm part (6) is in an extended position (E) and the second supporting arm part (7) is in an end position (G) the at least one extension leaf (4) is positioned in the use position (C).

## Description

### Field of invention

The present invention relates to an extension table according to the preamble of claim 1.

### Prior art

Tables that are used in areas with limited space are usually made extendable in order to minimize the space required for the table when not used. One such area with limited space is in transport devices such as trains, where extension tables are used to allow easy access to the seats while still being able to give each passenger an adequate table top area for work or other activities. In trains today it is common to use extension tables where an extension leaf is stored on top of the table top and extended by folding out the extension leaf. This solution has a number of drawbacks, e.g. that the table top has to be cleared before the extension leaf can be stored away and that there is a risk of getting your fingers caught or squeezing things when folding the extension leaf.

Another type of extension table uses extension leaves which are stored in or under the table top and then pulled-out when needed. These extension leaves usually come with edges which are required for the pull-out action but which can be in the way when using the table top. The conventional pull-out extension leaves also need advanced mechanisms for keeping the extension leaf extended once pulled-out.

Accordingly, there is a need for an improved extension table.

### The invention

One object of the present invention is therefore to provide an extension table, where at least one extension leaf is stored under the table top, is easy to extend, and is properly secured when extended.

A further object of the invention is to provide an improved extension table, which maximizes the user friendliness of the table and which minimizes the risk of injuries.

These and other objects are achieved with the extension table according to the invention as it is defined in claim 1.

Preferred embodiments and developments of the invention are defined in the dependent claims.

According to an embodiment of the invention, an extension table is provided comprising a table top, a table stand and at least one extension leaf which is carried by at least two supporting arms. The at least one extension leaf is stored under the table top in a storage position and is extended to a use position when a larger table top area is required. The at least two supporting arms are used to transfer the at least one extension leaf from the storage position to the use position.

The table is extended in two steps, the extension leaf is first pulled-out from its storage position under the table top and then with a rotational movement of the at least two supporting arms raised and transferred to its use position. In the use position the upper surface of the extension leaf is at substantially the same level as the upper surface of the table top and the extension leaf is securely positioned against the side of the table top.

In summary, the extension table according to the invention thus fulfils very high demands on user friendliness and safety.

### Short description of the drawings

Further advantages, features and embodiments of the invention will be evident from the following detailed description of embodiments of the extension table according to the invention shown in the appended drawings. In the drawings:
Fig. 1 shows a side view of a long side of an extension table according to a first embodiment of the invention, with extension leaves in a storage position,
Fig. 2 shows a side view of a long side of the extension table according to the first embodiment of the invention, with one extension leaf in between the storage position and a use position,
Fig. 3 shows a side view of a long side of the extension table according to the first embodiment of the invention, with one extension leaf in the use position,
Fig. 4 shows a side view of a short side of the extension table according to a second embodiment of the invention, with one extension leaf being transferred away from the table top,
Fig. 5 shows a side view of a short side of the extension table according to the second embodiment of the invention, with one extension leaf being transferred towards the table top
Fig. 6 shows a side view of a short side of the extension table according to the first embodiment of the invention,
Fig. 7 shows a view from below the extension table according to the first embodiment of the invention, with slewing bracket coupling means,
Fig. 8 shows a view from below the extension table according to the first embodiment of the invention, with U-shaped coupling means,
Fig. 9 shows a view from below the extension table according to the second embodiment of the invention,
Fig. 10 shows the rotational movement of a supporting arm when an extension leaf is extended, and
Fig. 11 shows one mechanism for stopping the rotational movement of the supporting arm.

### Detailed description of embodiments of the invention

The invention will be described in more detail below in connection with the embodiments shown in the appended drawings.

In the embodiments of the invention shown in the figures, the extension table has four extension leaves. The invention is however not limited to this embodiment, but instead any number of extension leaves can be used without departing from the general idea of the invention.

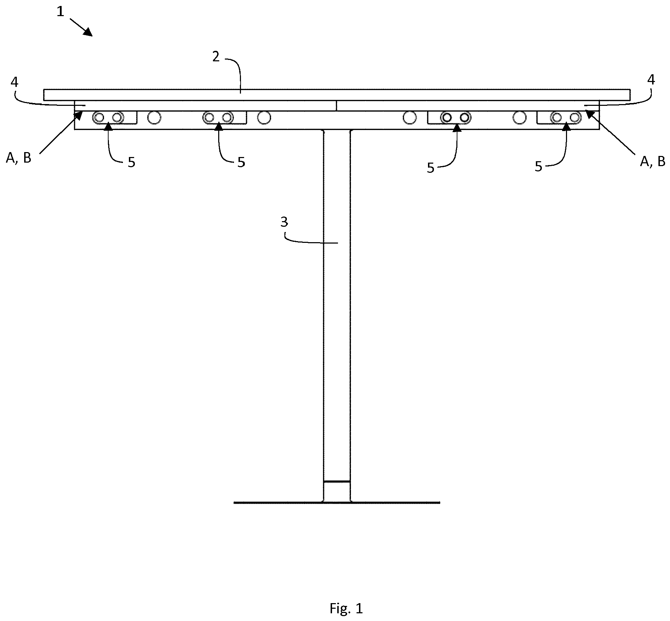

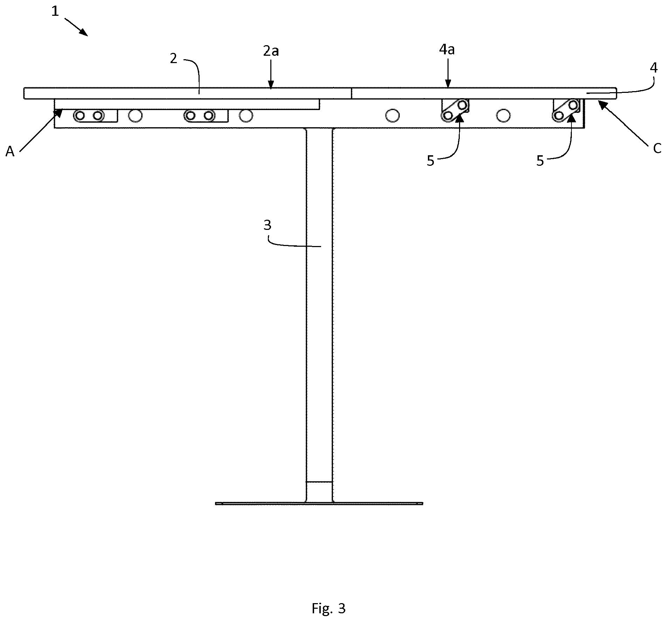

Fig. 1 shows one embodiment of an extension table according to the invention. The extension table 1 comprises a table top 2, a table stand 3, four extension leaves 4 and eight supporting arms 5 supported by suitable attachment means. There are two extension leaves 4 on each side of the extension table 1, and each extension leaf 4 is carried by two supporting arms 5. The supporting arms 5 can be extended in an extension direction and rotated in a plane either perpendicular or parallel to the extension direction. It is said features of the supporting arms 5 that allows the extension leaves 4 to be transferred from their respective storage position A to their respective use position C (shown in Fig. 3).

Fig. 1 shows a side view of the long side of the extension table 1 meaning that only two of the four extension leaves 4 are visible in the figure. For the same reason, only four of the eight supporting arms 5 are visible in Fig. 1. In Fig. 1 the two extension leaves 4 are shown in their respective storage position A under the table top 2.

Below is a general description of the extension of the extension table 1 which is performed in two steps. In a first step the extension leaf 4 is moved from the storage position A to a pulled-out position B and in a second step the extension leaf 4 is moved from the pulled-out position B to a use position C. The pulled-out position B of the first step is reached by extending/displacing the supporting arms 5 in an extension direction perpendicular to the long side of the table top 2. Said motion does not change the height of the extension leaf 4 relative to the table top 2. Hence, the side view of the long side of the extension table 1 after the first step, i.e. with the extension leaf 4 in its pulled-out position B, is still the same as in Fig. 1. In the second step, the extension leaf 4 is raised and transferred from its pulled-out position B to its use position C by a rotational movement of the supporting arms 5 connected to said extension leaf 4. In a first embodiment, the rotational movement of the supporting arms 5 and hence the transfer movement of the extension leaf 4 take place in a plane perpendicular to the extension direction of the supporting arms 5, i.e. in a plane parallel to the long side of the table top 2. While in a second embodiment the rotational movement of the supporting arms 5 and hence the transfer movement of the extension leaf 4 takes place in a plane parallel to the extension direction of the supporting arms 5, i.e. in a plane perpendicular to the long side of the table top 2.

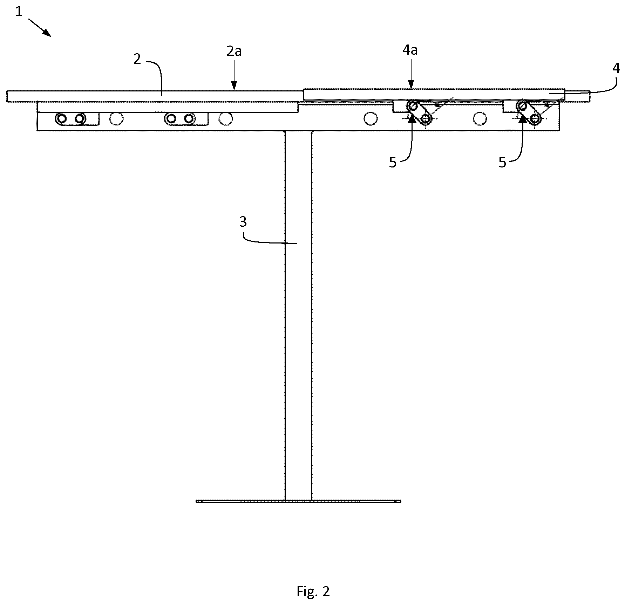

The extension of the extension table 1 according to the first embodiment will now be described with reference to Figs. 2 and 3. Fig. 2 shows a side view of the long side of the extension table 1 in which the extension leaf 4 has been pulled-out and raised with the transfer movement, in the plane perpendicular to the extension direction of the supporting arms 5, towards the use position C. The supporting arms 5 have been rotated about 45 degrees from their respective start position with the rotational movement. At this point an upper surface 4a of the extension leaf 4 is above an upper surface 2a of the table top 2, as shown in Fig. 2. The supporting arms 5 are rotated further and, when the rotational movement is completed, the transfer of the extension leaf 4 is completed and the extension leaf 4 is hence in the use position C, shown in Fig. 3. In the use position C, the upper surface 4a of the extension leaf 4 is positioned at substantially the same level as the upper surface 2a of the table top 2, as shown in Fig. 3.

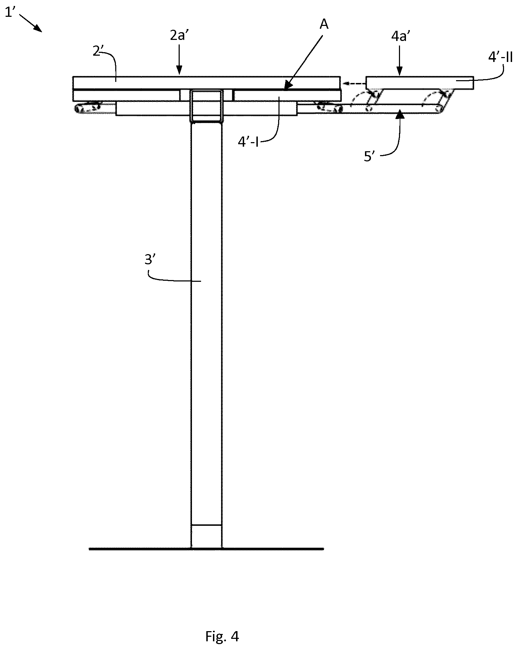

The extension of the extension table 1' according to the second embodiment will now be described with reference to Fig. 4. Fig. 4 shows a side view of the short side of the extension table 1' with the extension leaf 4' in two different positions I, II. In the first position I, the extension leaf 4' is in its storage position A. In the first step of the extension according to the second embodiment, the extension leaf 4' is pulled-out from the first position I and then raised and transferred with a rotational movement of the supporting arms 5' to the second position II, shown in Fig. 4. In the second embodiment, the transfer movement of the extension leaf 4' and the rotational movement of the support arms 5' take place in a plane parallel to the extension direction of the supporting arms 5' and transfer the extension leaf 4' away from the table top 2', as indicated by the semi-circular dashed arrows in Fig. 4. In the second position II the upper surface 4a' of the extension leaf 4' is at substantially the same level as the upper surface 2a' of the table top 2'. Finally, the extension leaf 4' is pushed in against the long side of the table top 2', as indicated by the straight dashed arrow in Fig. 4. The extension leaf 4' is then in its use position C, not shown in Fig. 4. The extension leaf 4' is thereby securely positioned against the long side of the table top 2' and there is no risk that the extension leaf 4' will be pushed in or down by accident.

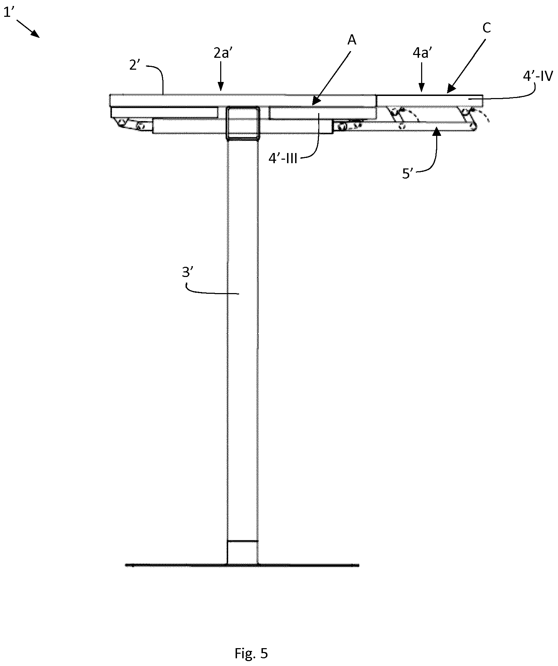

In an alternative second embodiment, the rotational movement of the support arms 5' raises and transfers the extension leaf 4' towards the table top 2', instead of away from the table top 2'. One such embodiment is shown in Fig. 5. In Fig. 5 the extension leaf 4' is shown in two different positions III, IV. In the third position III the extension leaf 4' is in its storage position A and in the fourth position IV the extension leaf 4' is in its use position C. The rotational movement of the support arms 5' moving the extension leaf 4' to the fourth position IV is indicated with dashed arrows in Fig. 5. As can be seen from Fig. 5, the rotational movement of the support arms 5' in this embodiment moves the extension leaf 4' towards the table top 2'. The extension leaf 4' is thereby securely positioned against the table top 2' in the fourth position IV, i.e. its use position C.

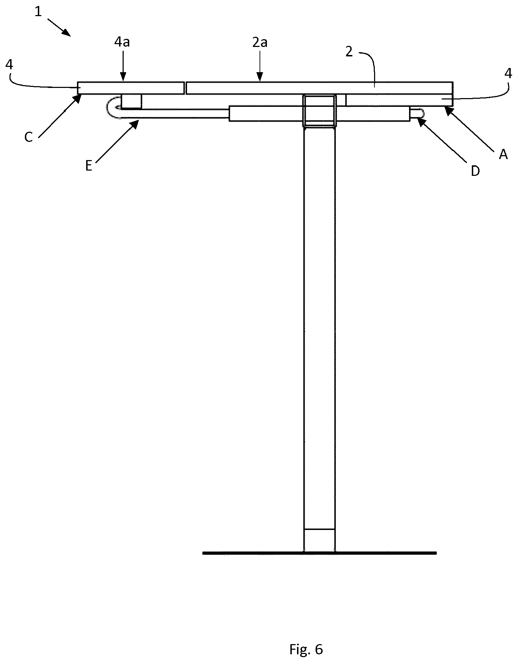

Fig. 6 shows the extension table 1 according to the first embodiment from the short side with one extension leaf 4 in its storage position A (to the right) and one extension leaf 4 (to the left) in its use position C. In the storage position A, the extension leaf 4 is positioned under the table top 2 and in line with an edge of the long side of the table top 2, i.e. not protruding from underneath the table top 2. Furthermore, the supporting arm 5 is in a retracted position D. In the use position C, the upper surface 4a of the extension leaf 4 is at substantially the same level as the upper surface 2a of the table top 2 and the extension leaf 4 is positioned against the long side of the table top 2. The extension leaf 4 is thereby securely positioned and there is no risk that the extension leaf 4 will be pushed in or down by accident. Furthermore, the supporting arm 5 is in an extended position E.

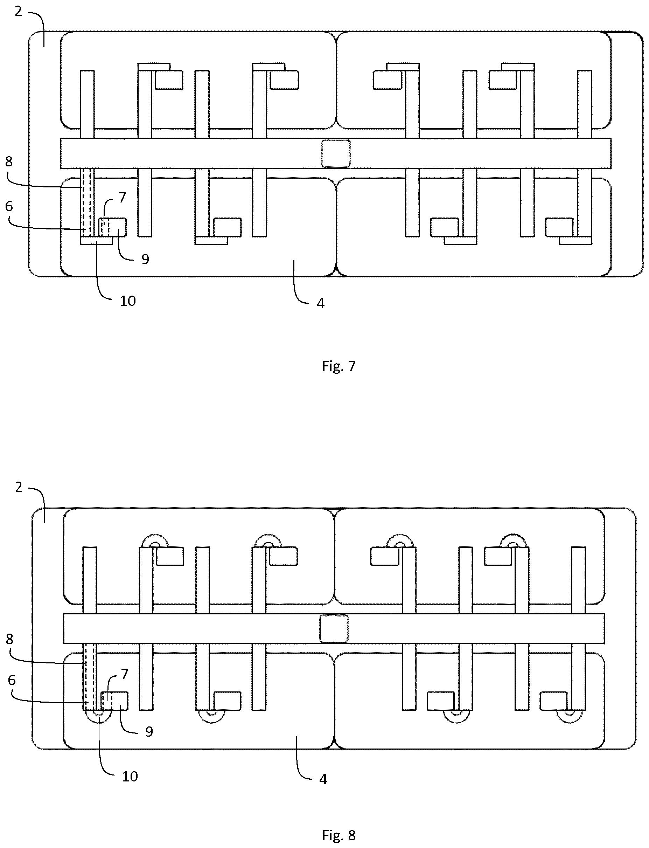

Fig. 7 shows the extension table 1 according to the first embodiment from below. In Fig. 7 four extension leaves 4 are shown in the storage position A of extension leaf 4 under the table top 2. Two supporting arms 5 are attached to each extension leaf 4. Each supporting arm 5 comprises two parts, a first supporting arm part 6 and a second supporting arm part 7. Each of the first supporting arm parts 6 is rotatably and extendably attached to the table stand 3 or the table top 2 with an attachment means 8 and each of the second supporting arm parts 7 is rotatably attached to one of the extension leaves 4 with an attachment means 9. The attachment means 8 enables the first supporting arm part 6 to rotate around its longitudinal axis and also be extended/displaced in an extension direction along its longitudinal axis from the retracted position D to the extended position E. In Fig. 7 the first supporting arm parts 6 are shown in their retracted positions D. The attachment means 9 enables the second supporting arm part 7 to rotate relative to the extension leave 4.

The first supporting arm part 6 and the second supporting arm part 7 are coupled together with a coupling means 10 and arranged in parallel with each other. In the embodiment shown in Fig. 7 the two supporting arm parts 6, 7 are coupled with a slewing bracket 10. The invention is however not limited to this embodiment, but instead other means of coupling can be used. In addition, the two supporting arm parts 6, 7 could be integrated with the coupling means and thereby form one piece. In one such embodiment, the supporting arms 5 are formed in one piece shaped as a U, whereby the first supporting arm part 6 constitutes one leg of the U and the second supporting arm part 7 constitutes the other leg of the U. The coupling means 10 is then integrated with the two supporting arm parts 6, 7 and constitutes the curved section of the U-shape. This embodiment of the supporting arms 5 is shown in Fig. 8.

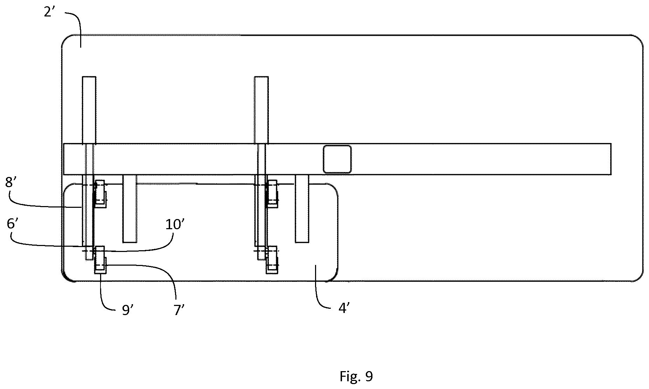

Fig. 9 shows the extension table 1' according to the second embodiment from below. In Fig. 9 one extension leaf 4' is shown in its storage position A under the table top 2'. Two supporting arms 5' are attached to the extension leaf 4' and shown in their retracted positions D. In the same way as in the first embodiment, each supporting arm 5' comprises two parts, a first supporting arm part 6' and a second supporting arm part 7', attached with attachment means 8' and attachment means 9', respectively. The first supporting arm part 6' and the second supporting arm part 7' are coupled together with a coupling means 10' which in the second embodiment is arranged parallel with the longitudinal axis of the first supporting arm part 6'. In the embodiment shown in Fig. 9 the two supporting arm parts 6', 7' are coupled with a slewing bracket 10'. The invention is however not limited to this embodiment, but instead other means of coupling can be used.

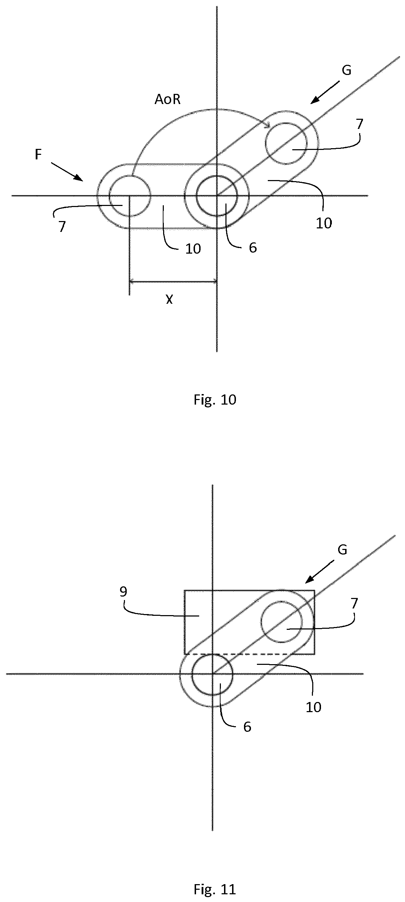

Fig. 10 shows the rotational movement of one supporting arm 5 according to the first embodiment when an extension leaf 4 is extended. In the embodiment shown in Fig. 10 the coupling means 10 is a slewing bracket 10. One side of the slewing bracket 10 is arranged around the cross-section of the first supporting arm part 6 and the other side of the slewing bracket 10 is arranged around the cross-section of the second supporting arm part 7. The first supporting arm part 6 and the second supporting arm part 7 are arranged at a distance x from each other. When the extension leaf 4 is in the storage position A and in the pulled-out position B the supporting arm 5 is in a start position F, shown in Fig. 10. In Fig. 10, the first supporting arm part 6 and the second supporting arm part 7 are arranged horizontally at the same level in the start position F. However, in other embodiments the first supporting arm part 6 and the second supporting arm part 7 may instead be arranged horizontally at different levels in the start position F. The angle between the first supporting arm part 6 and the second supporting arm part 7 is the same in both the storage position A and the pulled-out position B of the extension leaf 4. The extension leaf 4 is raised and transferred to its use position C by rotating the second supporting arm part 7 and the slewing bracket 10 around the cross-section of the first supporting arm part 6, i.e. around the longitudinal axis of the first supporting arm part 6. In Fig. 10, this rotational movement is a clockwise rotation and indicated with an Angel of Rotation AoR arrow. The rotational movement is stopped at a determined Angel of Rotation AoR. The supporting arm 5 is then in an end position G, shown in Fig. 10. The end position G of the supporting arm 5 thereby determines the height of the extension leaf 4 in its use position C and needs to be selected so that the upper surface 4a of the extension leaf 4 is at the same level as the upper surface 2a of the table top 2 in said use position C. In the embodiment shown in Fig. 10, the second supporting arm part 7 is positioned to the left of the first supporting arm part 6 in the start position F. However, the second supporting arm part 7 may also be positioned to the right of the first supporting arm part 6 in the start position F. In this case, the rotational movement of the second supporting arm part 7 would be an anti-clockwise rotation that would bring the second supporting arm part 7 to the left of the first supporting arm part 6.

The rotational movement of one supporting arm 5' according to the second embodiment is similar to the rotational movement of one supporting arm 5 according to the first embodiment but performed in a different plane, a plane parallel to the longitudinal axis of the first supporting arm part 6'. This is due to that in the second embodiment the coupling means 10' is arranged parallel with the longitudinal axis of the first supporting arm part 6'. One side of the coupling means 10' is therefore attached to the side of the first supporting arm part 6' while the other side of the coupling means 10' is arranged around the cross-section of the second supporting arm part 7'. This means that the second supporting arm part 7' and the coupling means 10' will rotate clockwise or anti-clockwise around a point at which the coupling means 10' is attached to the side of the first supporting arm part 6'. Hence, in the second embodiment the second supporting arm part 7' and the coupling means 10' rotate in a plane parallel to the longitudinal axis of the first supporting arm part 6', while in the first embodiment the second supporting arm part 7 and the coupling means 10 rotate in a plane perpendicular to the longitudinal axis of the first supporting arm part 6.

The end position G of the supporting arm 5, 5' according to any of the embodiments is determined by the length x of the coupling means 10, 10' between the attachment points of the two supporting arm parts 6, 6', 7, 7' in combination with the angel of rotation AoR from the start position F. Hence, the values of the length x and the angel of the rotation AoR is selected so that the extension leaf 4, 4' ends up at the right height in its use position C.

In order to achieve a stable end position G, the second supporting arm part 7, 7' needs to be rotated past its top dead centre. This means that when the supporting arm 5, 5' is in the end position G the weight of the extension leaf 4, 4' helps to hold the extension leaf 4, 4' in place and hinders it from falling back into the pulled-out position. In an embodiment, the angle of rotation of the second support arm part 7, 7', from the start position F to the end position G, is selected from the interval 100° to 170°, where the interval 120° to 160° is preferred and the interval 140° to 150° is most preferred.

A stable end position G also requires that the rotational movement is stopped at the determined angel of rotation AoR. Any type of conventional stopping means can be used for this purpose.

Fig. 11 shows one way to stop the rotational movement of the supporting arm 5 at the determined angel of rotation AoR which can be used in the first embodiment. The attachment means 9 of the second supporting arm part 7 is dimensioned so that a lower surface of the attachment means 9 rests directly on the first support arm part 6 when the second supporting arm part 7 reaches the desired angel of rotation AoR. Further rotation of the supporting arm 5 is thereby not possible.

## Claims

1. An extension table (1), comprising a table top (2), a table stand (3), at least one extension leaf (4), and at least two supporting arms (5) for carrying the at least one extension leaf (4) and for transferring the at least one extension leaf (4) from a storage position (A) to a use position (C) or vice versa; **characterized in that**
each supporting arm (5) comprises a first supporting arm part (6) and a second supporting arm part (7) coupled together by a coupling means (10);
the first supporting arm part (6) being rotatably and extendably attached to one of the table stand (3) and the table top (2) with an attachment means (8) and the second supporting arm part (7) being rotatably attached to the at least one extension leaf (4) with an attachment means (9);
the first supporting arm part (6) being arranged to move relative to the table stand (3) or the table top (2) from a retracted position (D) to an extended position (E) and vice versa;
the second supporting arm part (7) being arranged to move relative to the first supporting arm part (6) in a rotational movement from a start position (F) to an end position (G) and vice versa, wherein the rotational movement takes place in a plane perpendicular to an extension direction of the first supporting arm part (6); that
when the first supporting arm part (6) is in the retracted position (D) and the second supporting arm part (7) is in the start position (F) the at least one extension leaf (4) is positioned in the storage position (A); and that
when the first supporting arm part (6) is in the extended position (E) and the second supporting arm part (7) is in the end position (G) the at least one extension leaf (4) is positioned in the use position (C).

2. The extension table according to claim 1, **characterized in that** the storage position (A) is a position where the at least one extension leaf (4) is positioned under the table top (2).

3. The extension table according to claim 1 or 2, **characterized in that** the use position (C) is a position where an upper surface (4a) of the at least one extension leaf (4) is positioned at substantially the same level as an upper surface (2a) of the table top (2).

4. The extension table according to any one of the claims 1-3, **characterized in that** coupling means (10) coupling together the first supporting arm part (6) and the second supporting arm part (7) is a slewing bracket (10).

5. The extension table according to any one of the claims 1-3, **characterized in that** coupling means (10) coupling together the first supporting arm part (6) and the second supporting arm part (7) is integrated with said supporting arm parts (6, 7) to form a U-shaped piece, wherein the coupling means (10) constitutes the curved section of the U-shape.

6. The extension table according to any one of the claims 1-5, **characterized in that** the rotational movement of the second supporting arm part (7) is arranged to move the second supporting arm part (7) past its top dead centre.

7. The extension table according to claim 6, **characterized in that** the rotational movement of the second supporting arm part (7) from the start position (F) to the end position (G) has an angle of rotation (AoR) of 100° to 170°, preferably 120° to 160°, most preferably 140° to 150°.

8. The extension table according to any one of the claims 1-7, **characterized in that** the rotational movement of the second supporting arm part (7) is stopped at the end position (G) due to that a surface of the attachment means (9) of the second supporting arm part (7) is resting on the first support arm part (6) at said end position (G), preventing further rotation of the second supporting arm part (7).
